## Europäisches Patentamt

## European Patent Office

## Office européen des brevets

(19)

(11) Numéro de publication: **0 251 912 B1**

(12)

# FASCICULE DE BREVET EUROPEEN

(45) Date de publication du fascicule du brevet:
03.10.90

(51) Int. Cl.⁵: **C03C 25/02**

(21) Numéro de dépôt: 87401484.8

(22) Date de dépôt: 26.06.87

(54) Procédé d'enduction métallique étanche d'une fibre optique , et dispositif mettant en oeuvre ce procédé.

(30) Priorité: 30.06.86 FR 8609442

(43) Date de publication de la demande:
07.01.88 Bulletin 88/1

(45) Mention de la délivrance du brevet:
03.10.90 Bulletin 90/40

(84) Etats contractants désignés:
DE GB IT NL SE

(56) Documents cités:
FR-A- 2 148 479
GB-A- 2 105 618

PATENT ABSTRACTS OF JAPAN,
vol. 9, no. 130 (C-284)[1853], 5 juin 1985; &
JP-A-60 16 827 (KOGYO GIJUTSUIN
(JAPAN)) 28-01-1985
PATENT ABSTRACTS OF JAPAN,
vol. 9, no. 287 (C-314)[2010], 14 novembre 1985; &
JP-A-60 131 843 (HITACHI DENSEN K.K.) 13-07-1985

(73) Titulaire: THOMSON-CSF, 51, Esplanade du Général de Gaulle, F-92800 Puteaux(FR)

(72) Inventeur: Gombert, Jean, THOMSON-CSF
SCPI 19, avenue de Messine, F-75008 Paris(FR)
Inventeur: Quinty, Christian, THOMSON-CSF
SCPI 19, avenue de Messine, F-75008 Paris(FR)
Inventeur: Gazard, Maryse, THOMSON-CSF
SCPI 19, avenue de Messine, F-75008 Paris(FR)
Inventeur: Blaison, Serge, THOMSON-CSF
SCPI 19, avenue de Messine, F-75008 Paris(FR)

(74) Mandataire: Lepercque, Jean et al, THOMSON-CSF
SCPI, F-92045 PARIS LA DEFENSE CEDEX 67(FR)

## Description

L'invention concerne un procédé d'enduction métallique étanche d'une fibre optique et un dispositif mettant en oeuvre ce procédé, l'enduction réalisée ayant pour objet de supprimer la fatigue statique des fibres, c'est-à-dire la diminution au cours du temps de leur résistance mécanique.

Selon des techniques connues, les fibres optiques à base de verre de silice sont protégées de l'atmosphère extérieure par des revêtements organiques (nylon, silicone, époxy acrylate...). Ces revêtements ne sont ni étanches, ni exempts d'eau. Celle-ci peut diffuser jusqu'au verre où elle provoque, lorsque le verre est sous contrainte, une corrosion spécifique à l'endroit où le potentiel chimique est le plus élevé, c'est-à-dire à la pointe des fissures. Les fissures existent intrinsèquement à la surface du verre ou peuvent être provoquées par frottement mécanique. L'action conjuguée de l'eau et d'une contrainte se traduit par une croissance des fissures qui peut réduire la résistance mécanique jusqu'à rupture spontanée de la fibre même sous de très faibles contraintes. Ce phénomène est connu sous le nom de "corrosion sous contrainte" ou "fatigue statique" et peut être quantifié par l'équation

$\log t_s = - n \log \sigma_s + K$ dans laquelle :

- $t_s$ est le temps au bout duquel la fibre casse sous la contrainte $\sigma_s$,
- K est une constante
- n est la constante qui décrit le vieillissement de la fibre.

Plus n est grand, moins la fibre vieillit, (n = 30 pour une très bonne fibre télécommunication classique).

Pour arrêter ce mécanisme il faut donc, soit supprimer toute contrainte - ce qui dans la pratique est impossible puisque dès qu'une fibre est courbée elle subit des contraintes - soit supprimer toute trace d'eau au contact du verre de la fibre. Pour cela, il suffit de déposer sur cette dernière un revêtement étanche et ne retenant pas d'eau. Plusieurs matériaux possèdent cette propriété :

- Des céramiques comme les oxynitrures de silicium ou d'aluminium, le nitrure de silicium, le carbure de silicium ou le carbone hydrogéné (Diamond Like Carbone).
- Les métaux (Indium, Aluminium, Nickel, Or, etc...).

En ce qui concerne les céramiques :

Les dépôts des céramiques se font soit par C.V.D. soit par dépôt plasma sous vide. Dans les deux cas les vitesses de dépôt sont très lentes (quelques Å/s à quelques dizaines d'Å/s) et nécessitent des réacteurs très longs et/ou plusieurs passages de la fibre. Les équipements permettant ces types de dépôt seront donc très coûteux. Les céramiques sont très dures et peuvent parfois détériorer la surface de la fibre ce qui provoque une diminution de la résistance mécanique initiale. De plus, le dépôt C.V.D. s'effectue à chaud (600 à 1000°C) ce qui limite son application aux fibres en silice.

En ce qui concerne les métaux :

Les métaux peuvent eux aussi être déposés sous vide par dépôt plasma ou pulvérisation au magnétron. Les mêmes difficultés de dépôts et restrictions que dans le cas des céramiques déposées sous vide s'appliquent alors.

Le revêtement métallique peut aussi se faire par passage de la fibre dans du métal fondu. Plusieurs procédés peuvent dans ce cas être employés :

- passage de la fibre dans une fente ou un anneau dans lequel le métal est tenu par tension superficielle. La difficulté consiste alors à contrôler très rigoureusement le débit d'arrivée de métal liquide de sorte à n'avoir, ni trop de matière qui conduirait à une enduction en gouttes, ni trop peu de matière qui conduirait à des manques.

- passage de la fibre dans un bain de métal fondu et une filière par analogie au procédé utilisé pour le revêtement plastique.

Il est cependant difficile d'obtenir une enduction régulière en épaisseur et centrée sur la fibre du fait de l'existence de turbulences dans le bain de métal fondu lors du passage de la fibre.

C'est pourquoi l'invention concerne un procédé et un dispositif permettant de résoudre cette difficulté en vue de réaliser, sur une fibre, un revêtement métallique régulier.

L'invention concerne donc un procédé d'enduction métallique étanche d'une fibre optique dans lequel le matériau d'enduction est un métal fondu et dans lequel l'enduction se fait par passage de la fibre dans une filière au-dessus de laquelle se trouve le métal fondu, caractérisé en ce qu'il prévoit de réaliser une dépression au-dessus du métal fondu.

L'invention concerne également un dispositif d'enduction métallique étanche d'une fibre optique, mettant en oeuvre le procédé précédent, selon lequel il comporte un creuset, contenant dans une enceinte, un métal fondu, la partie supérieure du creuset possédant un trou pour le passage d'une fibre, le fond du creuset comportant une filière située dans l'alignement du trou pour la sortie de la fibre, caractérisé en ce qu'il comporte également des moyens permettant d'établir une dépression dans ladite enceinte.

Les différents objets et caractéristiques de l'invention apparaîtront plus clairement dans la description qui va suivre faite en se reportant aux figures annexées qui représentent :

- la figure 1, un exemple d'écoulement d'un métal fluide autour d'une fibre avec des turbulences ;
- la figure 2, un exemple d'écoulement d'un métal fluide autour d'une fibre en régime stable ;
- la figure 3, un exemple de réalisation d'un dispositif d'enduction métallique selon l'invention ;
- la figure 4, un autre exemple de réalisation d'un dispositif d'enduction métallique selon l'invention ;
- la figure 5 une variante d'un exemple de réalisation du dispositif d'enduction métallique selon l'invention ;
- la figure 6, une variante d'un exemple de réalisation d'un dispositif d'enduction métallique comportant également un dispositif d'enduction polymère.

On va tout d'abord décrire le procédé de l'invention permettant de réaliser une enduction métallique continue et centrée autour d'une fibre optique. Il présente l'avantage de pouvoir déposer soit le métal seul, soit le métal puis un autre revêtement (polymère...) grâce à un dispositif simple et peu encombrant.

La difficulté de l'enduction par un métal fondu vient de la très faible viscosité de ce dernier. En effet, il est possible de montrer qu'en première approximation la force de rappel qui s'exerce sur la fibre dans une filière est proportionnelle à la viscosité du liquide servant à l'enduction. Or en passant d'un polymère à un métal fondu on passe d'une viscosité de quelques dizaines de poises à quelques centipoises ce qui diminue dans le même rapport la force de centrage.

Le choix du métal est conditionné par :
- sa température de fusion inférieure à 1000°C,
- son adhérence à la silice,
- son inertie vis-à-vis de la silice, - sa dureté (qui ne devra pas être trop grande pour éviter la création de microcourbures).

Ainsi, on trouve toute une série de métaux lourds dont le point de fusion est assez bas et qui ont une faible dureté (In, Bi, Sn, Pb) ainsi que l'aluminium qui adhère à la silice et résiste mieux à l'abrasion que les métaux lourds. Toutefois la dureté de l'aluminium plus grande que celle de l'Indium par exemple, provoquera, sur les fibres multimodes notamment, plus de pertes par microcourbures.

Les métaux qui peuvent être utilisés ont, lorsqu'ils sont fondus, une densité importante et leur pression hydrostatique sera donc également importante, même pour de faibles hauteurs de métal dans le bac d'enduction. Notamment, les dispositifs utilisés pour l'enduction polymère des fibres prévoient de faire passer la fibre à enduire dans un bain et de prévoir, dans le fond du bac, à la sortie du bain, une filière à travers laquelle passe la fibre et qui permet de calibrer l'épaisseur de la couche enduite. Dans ces conditions, la pression hydrostatique mentionnée précédemment peut être à l'origine de perturbations hydrostatiques.

L'invention concerne donc un procédé permettant de pallier cet inconvénient.

Selon le procédé de l'invention, on prévoit de créer, au-dessus du bain de métal fondu, une dépression permettant de réduire la pression hydrostatique durant le passage de la fibre dans le bain et à travers la filière.

En réduisant la pression hydrostatique trop forte, ce procédé permet d'obtenir des conditions d'écoulement laminaire avec des métaux qui peuvent avoir des viscosités de quelques centipoises.

De plus, le procédé de l'invention permet également d'éviter l'oxydation du métal utilisé pour l'enduction de la fibre. En effet, en cas d'oxydation même partielle du métal, il y a risque important pour que l'oxyde raye la fibre et la détériore.

Le procédé de l'invention prévoit donc que l'enduction soit faite en atmosphère inerte.

Enfin, le procédé de l'invention prévoit également de guider la fibre en amont et en aval de la filière de façon à maintenir la fibre dans l'axe de la filière, ce qui permet de compenser des forces de centrage très faibles dues à une viscosité faible du matériel fondu.

Le procédé de l'invention permet ainsi d'effectuer des dépôts de quelques micromètres d'épaisseur en ligne et en un seul passage. Le revêtement obtenu est uniforme et une fibre ainsi revêtue de métal conservera presque intégralement sa résistance mécanique au cours du temps, (perte inférieure à 10% en 10 ans) alors qu'une fibre classique d'excellente qualité mécanique revêtue d'époxy acrylate en perdrait 50% dans le même temps.

Selon une variante du procédé de l'invention, on prévoit avant l'enduction de la fibre par le métal fondu, une ou plusieurs étapes de rinçage du métal fondu. Par exemple, dans le cas de l'indium.

Dans le but d'éviter que des particules d'oxyde d'indium très dures ne subsistent et rayent la fibre (diminuant la résistance mécanique jusqu'à entraîner dans certains cas la rupture lors du fibrage), le métal brut a été décapé puis fondu dans une boîte à gants sous azote sec.

La procédure suivante a été retenue et est indiquée à titre d'exemple.

L'indium est placé une minute sous agitation et à température ambiante dans la solution suivante :
. 1 volume d'acide chlorhydrique concentré,
. 2 volumes d'eau oxygénée à 30%,
. 4 volumes d'eau désionisée.

Après trois rinçages à l'eau désionisée et trois rinçages au propanol, l'indium est séché et fondu dans une boîte à gants sous azote pour être ensuite versé dans le bac d'enduction. Après refroidissement, la surface est recouverte de fréon. Le bac d'enduction est alors sorti de la boîte à gants, placé dans l'enceinte sur la tour de fibrage et le fréon est évaporé par chauffage à 80°C sous Argon.

L'indium ainsi préparé présente un état de surface brillant, la fibre en début de fibrage pénètre très facilement dans le bac d'enduction et aucune cassure en cours de fibrage n'est plus observée.

La préparation (désoxydation) et le conditionnement de l'Indium avant enduction est donc une étape importante si l'on veut conserver à la fibre sa résistance mécanique initiale.

Selon une autre variante du procédé de l'invention, après passage dans la filière, la fibre passe dans une chambre de sortie contenant un gaz neutre et des traces d'oxygène pour contrôler la tension superficielle du métal en sortie de filière (quelques pourcent d'oxygène au maximum).

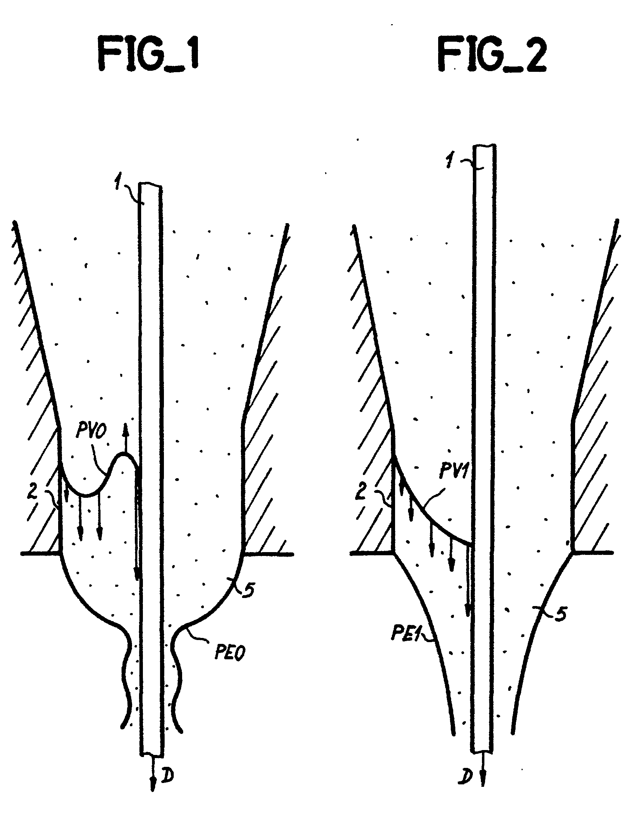

Les figures 1 et 2 représentent une fibre 1 passant dans une filière 2, selon une direction D. Un fluide d'enduction 5, tel qu'un métal fondu, se trouve dans la filière. En l'absence d'application du procédé de l'invention, le profil de vitesses d'écoulement du fluide dans la filière a l'allure indiquée par la courbe PVO en figure 1 avec des vitesses variant irrégulièrement en allant du bord de la filière 2 vers la fibre 1. A la sortie de la filière, le profil d'écoulement du fluide a une allure PEO d'un type présentant des irrégularités telles que la fibre risque de présenter des défauts d'enduction.

Par contre, par le procédé de l'invention, on obtient comme représenté en figure 2 un profil de vitesse d'écoulement du fluide PV1 tel que les vitesses du fluide croissent régulièrement entre la filière 2 et la fibre 1. Le profil d'écoulement PE1 est alors régulier assurant un revêtement uniforme de la fibre 1.

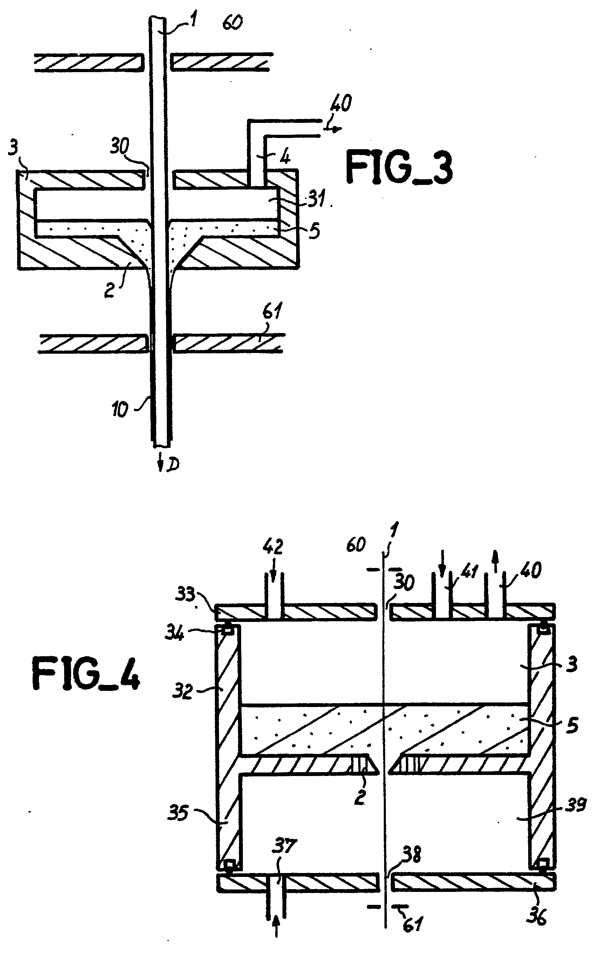

En se reportant à la figure 3, on va décrire un dispositif d'enduction métallique selon l'invention permettant de mettre en oeuvre le procédé précédemment décrit.

Ce dispositif comporte un creuset 3 chauffé par des moyens non représentés et contenant dans une chambre 31 un métal fondu 5. Le creuset est en matériau dépendant de la nature du métal 5. Il sera, par exemple, en nitrure de bore ou en alumine dans le cas où le métal 5 est de l'aluminium, ou en acier inoxidable pour de l'indium.

Le creuset comporte à sa partie supérieure un trou 30 permettant le passage de la fibre 1. Dans l'alignement de ce trou, à la partie inférieure, se trouve une filière 2 munie d'un trou de passage de la fibre 1. Le trou de la filière a une dimension permettant de laisser passer en même temps que la fibre, une quantité déterminée de métal fondu 5. La filière 2 calibre ainsi l'épaisseur du revêtement métallique réalisé sur la fibre 1. Par ailleurs, des guides 60 et 61 permettent de maintenir la fibre 1 dans l'axe du trou 30 et de la filière 2.

L'enceinte 31 du creuset 3 contient une quantité limité de métal fondu 5 de telle façon que la hauteur de métal exerce une pression minimale au niveau de la filière 2. De plus, pour appliquer le procédé de l'invention, le creuset 3 comporte un orifice 4 relié à un dispositif de pompage non représenté par un tube 40 et permettant de réaliser une dépression dans l'enceinte 31 au-dessus du niveau du métal fondu 5. Comme cela est expliqué précédemment dans la description du procédé, cette dépression permet d'obtenir un écoulement laminaire du métal fondu autour de la fibre 1 et par suite d'avoir un revêtement régulier.

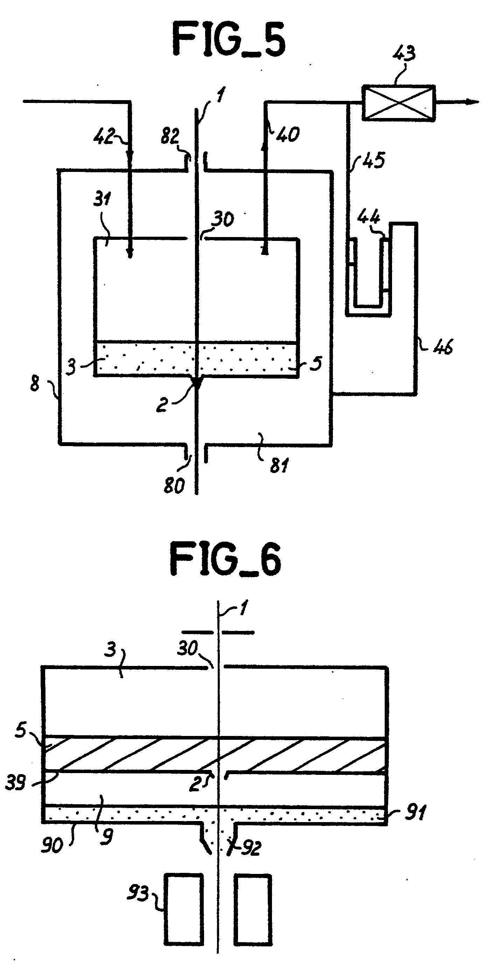

En se reportant à la figure 4, on va maintenant décrire un exemple de réalisation détaillé du dispositif de l'invention.

Ce dispositif comporte un creuset 3 délimité par des parois 32. Le creuset 3 est fermé par un couvercle rodé 33 reposant sur les parois 32 par l'intermédiaire de moyens d'étanchéité 33. Dans le couvercle 33 sont prévus :
- un tube d'admission 41 d'un matériau de revêtement tel que de l'Indium
- un tube d'admission 42 d'un gaz neutre ;
- un tube d'évacuation 40 permettant de réaliser une dépression dans le creuset 3.

Sous le creuset 3 est également prévue une enceinte de sortie 39 délimitée par des parois 35 et un couvercle 36. Le couvercle 36 comporte un tuyau 37 permettant l'admission d'un gaz particulier.

Les couvercles 33 et 36 comportent des trous 30 et 38 permettant le passage et le guidage de la fibre 1. D'autres guides 30 et 31 peuvent également être prévus.

Le dispositif de la figure 4 établit une dépression dans le creuset 3 par rapport à l'enceinte de sortie 39. Dans ces conditions, ce dispositif peut également fonctionner en établissant par le tube 37, une légère surpression dans l'enceinte de sortie 39. Si les pressions dans le creuset 3 et l'enceinte de sortie 39 sont respectivement p0 et p1, l'essentiel est qu'il existe une différence p1-p0 = $\Delta$p entre ces pressions de telle façon que p0<p1.

Le gaz neutre introduit par le tube 42 dans le creuset évite l'oxydation du métal liquide qui pourrait être à l'origine d'imperfections de revêtement de la fibre.

Bien que cela ne soit pas obligatoire, il est possible de prévoir de remplir l'enceinte de sortie 39 par un gaz permettant de contrôler la valeur de la tension superficielle du métal en sortie de filière. On utilisera pour cela, par exemple, le tuyau 37.

En se reportant à la figure 5, on va maintenant décrire une variante de réalisation du dispositif de l'invention.

Selon cette variante, le dispositif comporte un système de double enceintes. Le creuset 3 comportant l'enceinte 31 est contenu dans une deuxième enceinte 81 dont les parois 8 entourent complètement l'enceinte 31.

Une pompe 43 permet d'établir une dépression dans l'enceinte 30 par le tuyau 40. Un appareil de mesure de différence de pression 44 est relié par un tuyau 45 au tuyau 40 (donc à l'enceinte 31) et par un tuyau 46 à l'enceinte 81. Cet appareil 44 permet ainsi de mesurer la différence de pression existant entre les deux enceintes 31 et 81 et commande en conséquence la pompe 43 pour que celle-ci établisse et maintienne une différence de pression de valeur déterminée.

Dans ce dispositif, un tuyau 42 traverse l'enceinte 81 et alimente l'enceinte 31 en gaz neutre.

La fibre 1 traverse l'enceinte 81 par des trous 82 et 80 et l'enceinte 31 par un trou 30 et la filière 2.

Une autre variante du dispositif de l'invention représentée en figure 6, consiste à remplacer le dispositif d'alignement situé en dessous du creuset par un système d'enduction polymère qui sert à la fois de dispositif d'alignement et d'amortisseur pour la fibre. Ce bac d'enduction peut être situé à l'intérieur ou l'extérieur de l'enceinte étanche. Dans une telle configuration la fibre est enrobée d'un métal d'abord puis d'un polymère. Il est toutefois possible de conserver le dispositif d'alignement sous le creuset d'enduction métallique tout en gardant en aval de ce dispositif le bac d'enduction polymère.

Le revêtement du métal par un polymère est indispensable dans le cas des métaux mous (Indium par exemple) qui se rayent facilement par simple contact mécanique. Une enduction d'époxy acrylate sur l'enduction métallique protégera cette dernière de ces rayures.

On trouvera donc sur la figure 6, le creuset 3 contenant le bain de métal fondu 5 qui associé à une enceinte 9 d'enduction polymère, contenant un bain d'un matériau polymère 91. La fibre 1 traverse le creuset 3 et le bain 5 par l'ouverture 30 et la filière 2, puis l'enceinte 9 et le bain polymère 91 par un applicateur 92 de sortie du bain polymère. Un dispositif de réticulation 93 est prévu à la sortie du dispositif.

Dans les différents exemples de dispositifs décrits précédemment, au départ de l'opération d'enduction, l'enceinte 31 et le creuset 3 sont mis sous gaz neutre puis le creuset est chauffé. Le métal peut être soit présent dans le creuset au début du chauffage, soit ajouté ultérieurement par l'arrivée réservée à cet effet.

Le procédé de l'invention mis en oeuvre dans un dispositif décrit précédemment a permis d'obtenir les résultats suivants lors de l'enduction d'une fibre, en utilisant les caractéristiques suivantes :
Métal:Indium
Polymère:Epoxy acrylate
Température du métal:160°C
Dépression:3500 Pa par rapport à la pression atmosphérique
Atmosphère du creuset:Argon
Atmosphère de l'enceinte:Argon
Diamètre filière:0,3 mm
Diamètre fibre:110 μm
Epaisseur enduction métallique:5 μm Epaisseur enduction polymère:25 μm Vitesse de fibrage:20 m/min.

La fibre multimode ainsi obtenue présente des pertes rajoutées de 0,8 dB/km à 840 nm et 0,6 dB/km à 1300 nm, une résistance mécanique initiale des échantillons de 0,25 m de 4,5 GPa et une valeur de n de 45.

Dans les mêmes conditions opératoires que dans l'exemple précédent, on a obtenu en modifiant la dépression et le diamètre de fibre de la manière suivante :
Dépression:500 Pa par rapport à la pression atmosphérique ;
Atmosphère de l'enceinte:Argon + 2% oxygène
Diamètre:125 μm
Les résultats suivants :
La résistance mécanique initiale d'une telle fibre est de 2,5 GPa pour des échantillons de 1 m et la valeur de n est de 60.

Il est bien évident que les exemples numériques qui précédent ne sont donnés que pour faire mieux comprendre l'invention et que d'autres exemples numériques peuvent être envisagés sans sortir du cadre de l'invention.

## Revendications

1. Procédé d'enduction métallique étanche d'une fibre optique dans lequel le matériau d'enduction est un métal fondu (5) et dans lequel l'enduction se fait par passage de la fibre (1) dans une filière (2) au-dessus de laquelle se trouve le métal fondu, caractérisé en ce que l'on réalise une dépression au-dessus du métal fondu (5).

2. Procédé d'enduction métallique étanche d'une fibre optique dans lequel le matériau d'enduction est un métal fondu (5), caractérisé en ce que le métal fondu se trouve dans une atmosphère de gaz neutre.

3. Procédé d'enduction métallique étanche d'une fibre optique selon la revendication 1, caractérisé en ce que la filière (2) est située entre un creuset (3) contenant le métal fondu et une enceinte de sortie, et en ce qu'il prévoit de réaliser une dépression de l'atmosphère du creuset (3) par rapport à l'enceinte de sortie.

4. Procédé d'enduction métallique étanche d'une fibre optique selon la revendication 2, caractérisé en ce qu'il prévoit de nettoyer au préalable le métal d'enduction par agitation dans une solution décapante, puis est maintenue dans un gaz neutre jusqu'à la phase d'enduction et pendant la phase d'enduction.

5. Procédé d'enduction métallique étanche d'une fibre optique selon l'une quelconque des revendications précédentes, caractérisé en ce que après enduction, à la sortie de la filière (2), la fibre passe dans une atmosphère controlée.

6. Dispositif d'enduction métallique étanche d'une fibre optique mettant en oeuvre le procédé selon l'une quelconque des revendications précédentes, selon lequel il comporte un creuset (3), contenant dans une enceinte (31), un métal fondu (5), la partie supérieure du creuset possédant un trou (30) pour le passage d'une fibre (1), le fond du creuset comportant une filière (2) situé dans l'alignement du trou (30) pour la sortie de la fibre, caractérisé en ce qu'il comporte également des moyens permettant d'établir une dépression dans ladite enceinte (31).

7. Dispositif d'enduction métallique étanche d'une fibre optique selon la revendication 6, caractérisé en ce que le creuset est fermé de façon étanche à sa partie supérieure par un couvercle et que ledit creuset comporte au-dessus du niveau du métal fondu, un trou (4) relié à un tuyau de pompage (40) relié à des moyens de pompage permettant d'établir une dépression dans l'enceinte (31).

8. Dispositif d'enduction métallique étanche d'une fibre optique selon la revendication 6, caractérisé en ce que le creuset (3) comporte au-dessus du niveau du métal fondu (5) un tuyau (42) d'entrée de gaz neutre.

9. Dispositif d'enduction métallique étanche d'une fibre optique selon la revendication 6, caractérisé en ce qu'il comporte, à la sortie de la filière (2), une enceinte de sortie (39).

10. Dispositif d'enduction métallique étanche d'une fibre optique selon la revendication 9, caractérisé en ce qu'elle comporte des moyens permettant d'établir une différence de pression entre la pression à l'intérieur du creuset et la pression dans l'enceinte de sortie.

11. Dispositif d'enduction métallique étanche d'une fibre optique selon la revendication 6, caractérisé en ce que le creuset (3) est placé à l'intérieur d'une enceinte (81), des moyens permettant d'établir une différence de pression entre la pression à l'intérieur du creuset et la pression dans l'enceinte.

12. Dispositif d'enduction métallique étanche d'une fibre optique selon l'une des revendications 10 ou 11, caractérisé en ce que les moyens permettant d'établir une différence de pression comportent une pompe (43) reliée au creuset par un tuyau (40), un appareil de mesure de différence de pressions relié au creuset (3) par un tuyau (45) et à l'enceinte (8) par un tuyau (46), ledit appareil de mesure de différence de pressions permettant de commander la pompe (43).

13. Dispositif d'enduction métallique étanche d'une fibre optique selon la revendication 6, caractérisé en ce qu'il comporte une enceinte (9) d'enduction d'un matériau polymère situé sur le parcours de la fibre (1) en sortie de la filière (2) du creuset (3).

14. Dispositif d'enduction métallique étanche d'une fibre optique selon l'une des revendications 9 ou 11, caractérisé en ce que ladite enceinte (39, 81) est remplie d'un gaz.

**Claims**

1. A method for applying a tight metal coating on a glass fibre in which the coating material is a molten metal (5) and in which the coating is carried out by passing the fibre (1) through a hole (2), above which the molten metal is situated, characterized in that a depression is created above the molten metal (5).

2. A method for applying a tight metal coating on an optical fibre in which the coating material is a molten metal (5), characterized in that the molten metal is placed in a neutral gas atmosphere.

3. A method for applying a tight metal coating on an optical fibre according to claim 1, characterized in that the hole (2) is situated between a crucible (3) containing the molten metal and a closed outlet area, and in that it is created a depression of the crucible (3) atmosphere with respect to the closed outlet area.

4. A method for applying a tight metal coating on an optical fibre according to claim 2, characterized in that firstly the coating metal is cleaned by agitation in a corroding solution, and is then maintained in a neutral gas up to and during the coating phase.

5. A method for applying a tight metal coating on an optical fibre according any one of the preceding claims, characterized in that after the coating, the fibre passes at the outlet of the hole (2) into a controlled atmosphere.

6. A device for applying a tight metal coating on an optical fibre using the method according to any one of the preceding claims, containing a crucible (3), comprising in a closed area (31) a molten metal (5), the upper part of the crucible having an orifice (30) for the passage of a fibre (1), the bottom of the crucible comprising a hole (2) situated in alignment with the orifice (30) and intended for the outlet of the fibre, characterized in that it further comprises means permitting to establish a depression in said closed area (31).

7. A device for applying a tight metal coating on an optical fibre according to claim 6, characterized in that the crucible is tightly closed at its upper part by a lid and in that said crucible comprises, above the level of the molten metal, an orifice (4) connected to a pumping pipe (40) connected to pumping means permitting to establish a depression in the closed area (31).

8. A device for applying a tight metal coating on an optical fibre according to claim 6, characterized in that above the level of the molten metal (5), the crucible (3) comprises an inlet pipe (42) for neutral gas.

9. A device for applying a tight metal coating on an optical fibre according to claim 6, characterized in that it comprises, at the outlet of the hole (2), a closed outlet area (39).

10. A device for applying a tight metal coating on an optical fibre according to claim 9, characterized in that it comprises means permitting to establish a pressure difference between the pressure inside the crucible and the pressure in the closed outlet area.

11. A device for applying a tight metal coating on an optical fibre according to claim 6, characterized in that the crucible (3) is placed inside a closed area (81), means permitting to establish a pressure difference between the pressure inside the crucible and the pressure in the closed area.

12. A device for applying a tight metal coating on an optical fibre according to one of claims 10 or 11, characterized in that the means permitting to establish a pressure difference comprise a pump (43) connected to the crucible by a pipe (40), and a pressure difference measuring apparatus connected to the crucible (3) by a pipe (45) and to the closed area (8) by a pipe (46), said pressure difference measuring apparatus permitting to control the pump (43).

13. A device for applying a tight metal coating on an optical fibre according to claim 6, characterized in that it comprises a closed area (9) for coating with a polymer material situated on the passage-way of the fibre (1) at the outlet of the hole (2) of the crucible (3).

14. A device for applying a tight metal coating on an optical fibre according to one of claims 9 or 11, characterized in that said closed area (39, 81) is filled with a gas.

**Patentansprüche**

1. Verfahren zum dichten metallischen Beschichten einer Glasfaser, bei dem das Beschichtungsmaterial ein geschmolzenes Metall (5) ist und bei dem das Beschichten mittels Durchführen der Faser (1) durch eine Düse (2) geschieht, über der sich das geschmolzene Metall befindet, dadurch gekennzeichnet, daß man oberhalb des geschmolzenen Metalls (5) einen Unterdruck herstellt.

2. Verfahren zum dichten metallischen Beschichten einer Lichtleitfaser, bei dem das Beschichtungsmaterial ein geschmolzenes Metall (5) ist, dadurch gekennzeichnet, daß das geschmolzene Metall sich in einer Neutralgas-Atmosphäre befindet.

3. Verfahren zum dichten metallischen Beschichten einer Lichtleitfaser nach Anspruch 1, dadurch gekennzeichnet, daß die Düse (2) sich zwischen einem Tiegel (3), der das geschmolzene Metall enthält, und einem Ausgangsbehälter befindet, und daß es vorsieht, im Tiegel (3) einen Atmosphären-Unterdruck in Bezug zum Ausgangsbehälter herzustellen.

4. Verfahren zum dichten metallischen Beschichten einer Lichtleitfaser nach Anspruch 2, dadurch gekennzeichnet, daß es vorsieht, zuerst das Beschichtungsmetall durch Umrühren in einer Beizlösung zu reinigen und es dann bis zum Zeitpunkt der Beschichtung und während der Beschichtung in einem Neutralgas zu halten.

5. Verfahren zum dichten metallischen Beschichten einer Lichtleitfaser nach eine beliebigen der vorhergehenden Ansprüche, dadurch gekennzeichnet, daß die Faser nach dem Beschichten am Ausgang der Düse (2) in eine kontrollierte Atmosphäre gelangt.

6. Vorrichtung zum dichten metallischen Beschichten einer Lichtleitfaser, die das Verfahren nach einem beliebigen der vorhergehenden Ansprüche anwendet, gemäß dem sie einen Tiegel (3) aufweist, der in einem Behälter (31) ein geschmolzenes Metall (5) enthält, wobei der obere Behälter des Tiegels ein Loch (30) für den Durchtritt einer Faser (1) aufweist, der Boden des Tiegels eine Düse (2) aufweist, das in Flucht zum Loch (30) für den Ausgang der Faser liegt, dadurch gekennzeichnet, daß sie weiter Mittel aufweist, die es ermöglichen, im Behälter (31) einen Unterdruck herzustellen.

7. Vorrichtung zum dichten metallischen Beschichten einer Lichtleitfaser nach Anspruch 6, dadurch gekennzeichnet, daß der Tiegel an seinem oberen Teil durch einen Deckel dicht verschlossen ist und daß der Tiegel oberhalb des Pegels des geschmolzenen Metalls ein Loch (4) hat, das mit einer Pumpleitung (40) verbunden ist, welche mit Pumpmitteln verbunden ist, die es ermöglichen, im Behälter (31) einen Unterdruck herzustellen.

8. Vorrichtung zum dichten metallischen Beschichten einer Lichtleitfaser nach Anspruch 6, dadurch gekennzeichnet, daß der Tiegel oberhalb des Pegels des geschmolzenen Metalls (5) eine Einlaßleitung (42) für Neutralgas aufweist.

9. Vorrichtung zum dichten metallischen Beschichten einer Lichtleitfaser nach Anspruch 6, dadurch gekennzeichnet, daß sie am Ausgang der Düse (2) einen Ausgangsbehälter (39) aufweist.

10. Vorrichtung zum dichten metallischen Beschichten einer Lichtleitfaser nach Anspruch 9, dadurch gekennzeichnet, daß sie Mittel aufweist, die es ermöglichen, eine Druckdifferenz zwischen dem Druck im Inneren des Tiegels und dem Druck im Ausgangsbehälter herzustellen.

11. Vorrichtung zum dichten metallischen Beschichten einer Lichtleitfaser nach Anspruch 6, dadurch gekennzeichnet, daß der Tiegel (3) sich im Inneren eines Behälters (81) befindet, wobei Mittel es ermöglichen, einen Druckunterschied zwischen dem Druck im Inneren des Tiegels und dem Druck im Behälter herzustellen.

12. Vorrichtung zum dichten metallischen Beschichten einer Lichtleitfaser nach einem der Ansprüche 10 oder 11, dadurch gekennzeichnet, daß die Mittel, die es ermöglichen, einen Druckunterschied herzustellen, eine Pumpe (43), die mit dem Tiegel durch eine Rohrleitung (40) verbunden ist, und ein Gerät zur Messung von Druckunterschieden aufweisen, das mit dem Tiegel (3) durch eine Leitung (45) und mit dem Behälter (8) durch eine Rohrleitung (46) verbunden ist, wobei das Gerät zur Messung von Druckunterschieden es ermöglicht, die Pumpe (43) zu steuern.

13. Vorrichtung zum dichten metallischen Beschichten einer Lichtleitfaser nach Anspruch 6, dadurch gekennzeichnet, daß sie einen Behälter (9) zur Auftragung eines Polymermaterials aufweist, der sich auf dem Weg der Faser (1) am Ausgang der Düse (2) aus dem Tiegel (3) befindet.

14. Vorrichtung zum dichten metallischen Beschichten einer Lichtleitfaser nach einem der Ansprüche 9 oder 11, dadurch gekennzeichnet, daß der Behälter (39, 81) mit Gas gefüllt ist.

# FIG_1

# FIG_2

FIG_3

FIG_4

# FIG_5

# FIG_6